# EUROPEAN PATENT APPLICATION

(11) **EP 3 971 847 A1**
(43) Date of publication of application: **23.03.2022**
(21) Application number: 21197204.7
(22) Date of filing: 16.09.2021
(51) Int. Cl.: G07C 9/27, G06Q 10/10

(54) **BUILDING ACCESS CONTROL SYSTEM AND OPERATING METHOD THEREOF**

(30) Priority: 18.09.2020 KR 20200120497
(71) Applicant: ParkingCloud Co., Ltd., Seoul Yeongdeungpo-gu 07276 (KR)
(72) Inventor: SHIN, Sang Yong, 07548 Seoul (KR); HEO, Won Jin, 07276 Seoul (KR)
(74) Representative: Forresters IP LLP

(57) **Abstract**

The present disclosure relates to an operating method of a building access control system that is performed by a server to make a visit reservation. The operating method of a building access control system includes: receiving, from an inviter's device, a visitor registration request comprising visitor information and visiting place information; generating at least one temporary password based on the visiting place information; transmitting, to a visitor's device, an invitation message indicating the at least one temporary password; and transmitting the visiting place information and the temporary password to a local access system identified based on the visiting place information, and the at least one temporary password is generated corresponding to each of at least one of one or more entrance gates and parking lots included in the local access system. Other various embodiments are also possible.

## Description

### TECHNICAL FIELD

The present disclosure relates to a building access control system and an operating method thereof.

### BACKGROUND

Unless otherwise indicated herein, the materials described in this section are not prior art to the claims in this application and are not admitted as prior art by inclusion in this section.

In general, various many people access a collective building such as an apartment, a studio apartment or an office. In order to control access of these people while identifying them or checking the purpose of their visit, only statements of the visitors can be used or it is necessary to check the visitors whenever they visit.

Also, a parking lot of such a collective building provides free parking for vehicles of inviters or visitors to respective households. However, the parking lot is not sufficient for the increased number of vehicles to park in. Due to free parking provided in the building, vehicles of outsiders other than the inviters of the households or the visitors to the respective households are often illegally parked in the parking lot. Therefore, to manage security and parking space, a control system capable of efficiently managing access of people and vehicles to a building is needed.

As a conventional technology, Korean Patent Laid-open Publication No. 10-2009-0091985 discloses a technology capable of distinguishing a resident's vehicle or a reserved visitor's vehicle and a general visitor's vehicle from a vehicle plate number by image recognition and voice recognition and opening an access control barrier to the general visitor's vehicle after an inviter permits access to suppress illegal parking inside a parking lot.

However, the above-described method of managing a visitor's vehicle requires a manager to stay at the entrance to the parking lot and an inviter to stay at home.

### PRIOR ART DOCUMENT

### PATENT DOCUMENT

(Patent Document 1) Korean Patent Laid-open Publication No. 10-2009-0091985

### SUMMARY

The present disclosure provides a system for a building to efficiently control a visitor and a visitor's vehicle with high security and an operating method thereof.

Specifically, the present disclosure provides a building access control system by which an invitation from a resident or an inviter for access to a building is guaranteed, access to the building is highly secured by sequentially setting visiting areas, and the use of a temporary password makes it possible to perform a convenient and highly secured building access control without a security manager and an operating method thereof.

An aspect of the present disclosure provides an operating method of a building access control system, comprising: receiving, from an inviter's device, a visitor registration request comprising visitor information and visiting place information; generating at least one temporary password based on the visiting place information; transmitting, to a visitor's device, an invitation message indicating the at least one temporary password; and transmitting the visiting place information and the temporary password to a local access system indentified based on the visiting place information, and the at least one temporary password may be generated corresponding to each of at least one of one or more entrance gates and parking lots included in the local access system.

According to an embodiment, the at least one temporary password may be available only for a predetermined time included in the visiting place information.

According to an embodiment, the at least one temporary password may include a first temporary password and a second temporary password generated corresponding to two or more of the one or more entrance gates and parking lots included in the local access system.

According to an embodiment, the first temporary password and the second temporary password may follow the sequence of availability, and the second temporary password may be available after the first temporary password is used.

According to an embodiment, the second temporary password may be generated after the first temporary password is used.

According to an embodiment, when the at least one temporary password is generated corresponding to the parking lot, the at least one temporary password may include a vehicle plate number included in the visitor information, and when the vehicle plate number is recognized by a license number recognition device installed in the parking lot, the at least one temporary password may be used.

According to an embodiment, the operating method further includes generating a visitor page based on the visitor information, and the invitation message may include a link to the visitor page, and the visitor page may be configured to display an object to execute a navigation application and provide the visiting place information to the navigation application installed in the visitor's device in order to guide the visitor to the visiting place through the navigation application in response to an input to the object.

According to an embodiment, the inviter's device may include a wall pad installed in a residence of the inviter.

The foregoing summary is illustrative only and is not intended to be in any way limiting. In addition to the illustrative embodiments and features described above, further embodiments and features will become apparent by reference to the drawings and the following detailed description.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through the use of the accompanying drawings, in which:
**FIG. 1** is a configuration diagram illustrating a schematic configuration of a building access control system in accordance with an embodiment of the present disclosure.
**FIG. 2** is a block configuration diagram separately illustrating internal functional components of the building access control system shown in **FIG. 1****.**
**FIG. 3** is a flowchart explaining operations performed to provide a visit reservation service in accordance with an embodiment of the present disclosure.
**FIG. 4** illustrates an example of a screen for inputting visitor information by an inviter in accordance with an embodiment of the present disclosure.
**FIG. 5** illustrates an example of providing a notification message in a visit reservation service in accordance with an embodiment of the present disclosure when a visitor's vehicle enters a visiting area.
**FIG. 6** illustrates notification messages displayed on a visitor's device in accordance with an embodiment of the present disclosure.
**FIG. 7** is a flowchart explaining operations performed to provide a visit reservation service in accordance with another embodiment of the present disclosure.
**FIG. 8** illustrates an exemplary computer program product that is executed in a building access control system in accordance with an embodiment of the present disclosure.

### DETAILED DESCRIPTION

The terms used herein are used only to describe specific examples, but do not intend to limit the present disclosure. A singular expression includes a plural expression unless it is clearly construed in a different way in the context. All terms comprising technical and scientific terms used herein have the same meaning as commonly understood by a person with ordinary skill in the art to which this invention belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. In some cases, even terms defined in the present disclosure should not be interpreted as excluding embodiments of the present disclosure.

The foregoing features and other features of the present disclosure will be sufficiently apparent from the following descriptions with reference to the accompanying drawings. These drawings merely illustrate several exemplary embodiments in accordance with the present disclosure. Therefore, they should not be understood as limiting the present disclosure. The present disclosure will be described in more detail with reference to the accompanying drawings.

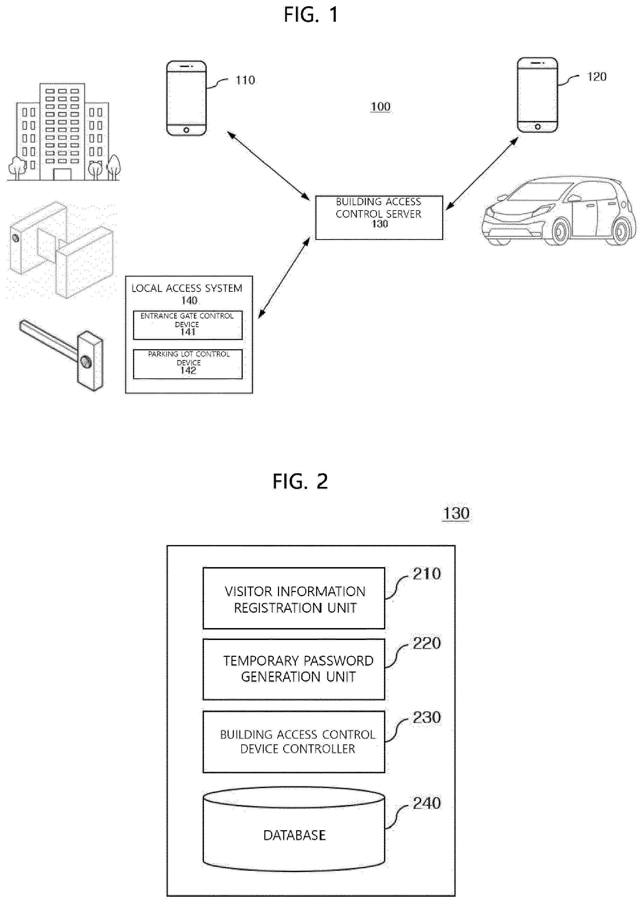

**FIG. 1** is a configuration diagram illustrating a schematic configuration of a building access control system in accordance with an embodiment of the present disclosure.

A building access control system 100 according to an embodiment of the present disclosure may include an inviter's device 110, a visitor's device 120, a building access control server 130 and a local access system 140 as shown in **FIG. 1**. As entities of building access control system 100, inviter's device 110, visitor's device 120, building access control server 130 and local access system 140 may be communicatively connected through a network and may transmit and receive information data and messages through the network. Here, the term Dcommunicative connectionD refers to a connection structure that enables information exchange between nodes such as a plurality of devices and servers included in inviter's device 110, visitor's device 120, building access control server 130 and local access system 140 of building access control system 100. Examples of the network that enables such communicative connection may include an RF, a 3GPP (3rd Generation Partnership Project) network, an LTE (Long Term Evolution) network, a 5GPP (5th Generation Partnership Project) network, a WiMAX (World Interoperability for Microwave Access) network, the Internet, a LAN (Local Area Network), a Wireless LAN (Wireless Local Area Network), a WAN (Wide Area Network), a PAN (Personal Area Network), a Bluetooth network, an NFC network, a satellite broadcasting network, an analog broadcasting network, a DMB (Digital Multimedia Broadcasting) network, and the like, but are not limited thereto.

Inviter's device 110 is a device of a person who resides or moves into one of various kinds of collective buildings, such as a commercial building, an apartment or a studio apartment, where numerous inviters reside, and may be a communicative electronic device. For example, inviter's device 110 may include portable devices, such as a mobile phone, a smartphone, a PDA, a tablet PC and a laptop, or non-portable computing devices, such as a desktop and a server. Also, inviter's device 110 may further include a wall pad installed in a residence. Likewise, visitor's device 120 may be a communicative electronic device carried by the visitor. For example, visitor's device 120 may include portable devices, such as a mobile phone, a smartphone, a PDA, a tablet PC and a laptop, or non-portable computing devices, such as a desktop and a server.

In inviter's device 110 and visitor's device 120, an application program for receiving a service, such as a visitor's parking request and permission and notification, using building access control system 100 may be installed. That is, a visit reservation service provided by building access control system 100 of the present disclosure can be implemented by the application program installed in inviter's device 110 and visitor's device 120. The inviter and the visitor may execute the application program installed in inviter's device 110 and visitor's device 120, respectively, and use various convenient graphic user interfaces (GUI) to make a reservation of a parking lot and receive a notification. Also, building access control system 100 of the present disclosure may be implemented by a web browser application executed in inviter's device 110 and visitor's device 120. Herein, the web browser refers to a program that allows web (world wide web: WWW) service to be used and receives and shows a hypertext described by HTML (hypertext mark-up language). The Web browser may include, for example, Netscape, Explorer, Chrome or the like.

According to an embodiment, building access control server 130 may be a cloud service environment in which computing resources of hardware and software at different physical locations are integrated by virtualization technology in order for building access control system 100 to provide a parking reservation service for a visitor's vehicle. In other words, building access control server 130 may include at least one server, and the at least one server may be configured to perform operations to be performed by building access control system 100 to provide a parking reservation service for a visitor's vehicle. Therefore, in the following description, building access control server 130 may refer to at least one server even if it is described in a singular form.

Local access system 140 may be a local system installed to manage one or more entrance gates of a collective building. Alternatively, local access system 140 may be a part of a security system installed in the collective building. Local access system 140 may include an entrance gate control device 141 and a parking lot control device 142.

Entrance gate control device 141 may include a device capable of managing one or more entrance gates included in the collective building. The one or more entrance gates included in the collective building may be equipped with an opening/closing device and an identification device that determines whether a person who wants to pass an entrance gate is authorized to pass. For example, the identification device may include at least one sensor unit for identifying the person who wants to pass the entrance gate. The sensor unit may include an imaging device or infrared recognition device that recognizes an identification tag (e.g., barcode, QR code or facial recognition) indicating authorization to pass. As another example, the control device may include an input unit (e.g., keypad) through which the user can input a password. The person who wants to pass the entrance gate may pass the entrance gate by proving his/her authorization to pass the entrance gate through the identification device.

Parking lot control device 142 may include a device capable of managing entry and exit of vehicles to and from the parking lot included in the collective building. parking lot control device 142 may include a barrier gate installed at the entrance to the parking lot and an imaging device configured to acquire an image of a vehicle plate number of an incoming or outgoing vehicle. parking lot control device 142 may transmit the vehicle plate number image acquired by the imaging device to local access system 140 or building access control server 130 and may open the barrier gate based on a control signal provided from local access system 140 or building access control server 130. In an embodiment of the present disclosure, if the vehicle plate number recognized from the vehicle plate number image acquired by the imaging device is matched with a reserved visitor's vehicle, the barrier gate is opened to allow the visitor's vehicle to enter the parking lot.

**FIG. 1** illustrates that only one local access system 140 is connected to building access control server 130. However, according to an embodiment, a plurality of local access systems 140 included in a plurality of collective buildings, respectively, may be connected to building access control server 130.

**FIG. 2** is a block configuration diagram separately illustrating internal functional components of the building access control system shown in **FIG. 1****.**

Referring to **FIG. 2**, building access control server 130 may include a visitor information registration unit 210, a temporary password generation unit 220, a building access control device controller 230 and a database 240. Each of the components included in building access control server 130 is not necessarily included in building access control server 130, and a vehicle plate number can also be recognized by local access system 140 or parking lot control device 142.

Visitor information registration unit 210 may register visitor information (e.g., identification information, phone number, expected time of visit or vehicle information) based on a request and permission for visit from inviter's device 110 or visitor's device 120. The visitor information may be stored in database 240. For example, visitor information registration unit 210 may determine and register the visitor information based on a direct request message from inviter's device 110 or a request message delivered from visitor's device 120. As another example, visitor information registration unit 210 may register vehicle information of the visitor only when identification information (*e*.*g*., phone number, address or name) of the inviter is stored in database 240. As yet another example, visitor information registration unit 210 may register the visitor information when receiving a permission message from inviter's device 110 in response to the request message. That is, visitor information registration unit 210 may check whether the inviter is authorized to invite somebody and whether the visitor receives permission from the inviter to register the visitor information.

Temporary password generation unit 220 may generate a temporary password that can be used by the visitor when entering the building. The inviter may use a fixed password when entering the building. However, if the visitor is informed of the fixed password, it may cause a security risk. Therefore, building access control system 100 of the present disclosure may generate a temporary password for each visitor so as not to expose the fixed password to the outside.

The temporary password generated by temporary password generation unit 220 may have various forms. In an embodiment, the temporary password may be composed of a combination of numbers. Entrance gate control device 141 or parking lot control device 142 may be equipped with an input device comprising a keypad, and the visitor may input the temporary password into the input device comprising the keypad to enter the building. The temporary password may also include letters or symbols depending on the type of the input device. In another embodiment, the temporary password may include a two-dimensional code. For example, the temporary password may include a barcode and a QR code. Temporary password generation unit 220 may transmit the generated two-dimensional code to visitor's device 120, and the visitor may enter the building by putting the two-dimensional code to a two-dimensional code recognition device installed in entrance gate control device 141 or parking lot control device 142. The temporary password generated by temporary password generation unit 220 may further include a voice password and may have various forms depending on a recognition device installed in entrance gate control device 141 or parking lot control device 142.

In an embodiment, visitor information registration unit 210 may register the visitor by restricting areas allowed for the visitor or sequentially set visiting areas. For example, the visitor may be restricted only to a lobby of the building. In this case, temporary password generation unit 220 may generate a temporary password for an entrance gate to the lobby of the building. As another example, if the visitor is scheduled to visit the building in a vehicle, the visitor's entry route into the building may be set from the parking lot as a primary area to the lobby and an office as a secondary area. In this case, even if an appropriate temporary password is an input into entrance gate control device 141 at the entrance gate to the lobby and the office, when parking lot control device 142 confirms that the vehicle of the visitor assigned a corresponding temporary password has not been entered the parking lot, the visitor's entry may be restricted. As yet another example, when it is confirmed that the visitor's vehicle has entered the primary area (e.g., the parking lot), a temporary password for the secondary area (e.g., the lobby and the office) may be generated. In this case, higher security can be expected.

Building access control device controller 230 may include a visitor's vehicle identification unit. The visitor's vehicle identification unit may analyze the vehicle plate number image received from parking lot control device 142 of local access system 140 to acquire the vehicle plate number of the incoming vehicle. An algorithm for recognizing a vehicle plate number is a computer vision algorithm and license plate recognition (LPR) technology known in the art may be used.

The visitor's vehicle identification unit may check whether the vehicle plate number of the incoming vehicle corresponds to a registered visitor's vehicle and may allow the vehicle to enter the parking lot. For example, the visitor's vehicle identification unit may check whether the vehicle plate number has been registered as visitor information in database 240.

Building access control device controller 230 may be configured to control entrance gate control device 141 and/or parking lot control device 142 of local access system 140. For example, building access control device controller 230 may be configured to control an operation of the barrier gate included in parking lot control device 142 depending on whether or not the visitor's vehicle has been identified.

Database 240 may manage and store information about the inviter and the visitor. For example, Data about the inviter may include name, address, phone number and whether an application has been installed. Data about the visitor may include vehicle plate number of visitor, visitor's name and phone number, date and time of visit, whether a visit has been permitted and information about a visiting target.

According to an embodiment, building access control server 130 may further include an application management unit (not shown). The application management unit provides a visit reservation application to inviter's device 110 and/or visitor's device 120 that requires a parking reservation application for visitors' vehicle. The visit reservation application may be basically installed in inviter's device 110 and visitor's device 120. The inviter may be provided with notifications about whether the visitor has visited, contact tracing in a visiting area, request and permission for visit and the like through the visit reservation application. The visitor may be provided with request for visit reservation, route guidance, notifications and the like through the visit reservation application.

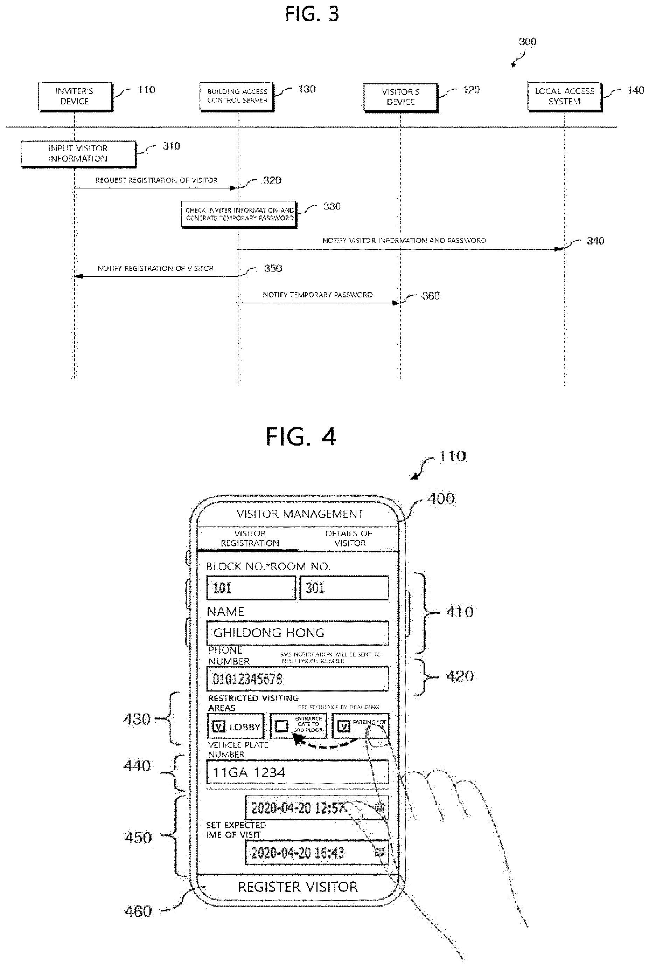

**FIG. 3** is a flowchart explaining operations performed to provide a visit reservation service in accordance with an embodiment of the present disclosure. A process 300 shown in **FIG. 3** may include one or more operations, functions and effects as exemplified by steps 310, 320, 330, 340, 350 and 360. Meanwhile, the outlined operations shown in **FIG. 3** are only provided as examples and some of the operations may be optional, combined into fewer operations, or expanded into additional operations without detracting from the essence of the disclosed embodiments. Also, the blocks of process 300 shown in **FIG. 3** may be performed for identical or similar functions or operations in association with the above description with reference to **FIG. 1** and **FIG. 2**, but the present disclosure is not limited thereto. Therefore, hereinafter, each step of process 300 shown in **FIG. 3** may be explained using the components of building access control system 100 shown in **FIG. 1** and the components of server 130 shown in **FIG. 2****.**

Referring to **FIG. 3****,** process 300 may begin at step 310 where an inviter inputs visitor information through inviter's device 110. When the inviter has a visitor to the building, the inviter may execute a visit reservation application or web browser application in inviter's device 110 and input the visitor information. At step 320, the input visitor information may be transmitted with a message requesting registration of the visitor from inviter's device 110 to building access control server 130. A specific example of inputting the visitor information by the inviter through inviter's device 110 for registration of the visitor will be described with reference to **FIG. 4****.**

**FIG. 4** illustrates an example of a screen for inputting visitor information by an inviter in accordance with an embodiment of the present disclosure. Referring to **FIG. 4**, the inviter may input the visitor information through a graphic user interface (GUI) 400 provided through the application or web browser application in inviter's device 110. GUI 400 may include a portion 410 to input residence information of the inviter, a portion 420 to input a phone number of the visitor, a portion 430 to set restricted visiting areas and the sequence thereof, a portion 440 to input a vehicle plate number when the visitor in a vehicle visits the building and a portion 450 to input the expected time of visit. After inputting the visitor information, the inviter may press a visitor registration button 460 to transmit the visitor information from inviter's device 110 to building access control server 130. Hereinafter, the residence or visiting place refers to a space as a target of visit reservation and may be variously described such as the inviter's address with substantially the same meaning.

Although not illustrated in the drawings, the inviter may perform a sign up process or an authentication process to authenticate authorization to invite the visitor's vehicle. For example, the inviter may input inviter identification information (e.g., address of building or visiting place) and personal information of the inviter through inviter's device 110 and provide the information to building access control server 130 and may perform a sign up process or an authentication process by performing a series of authentication processes. Here, building access control server 130 may provide authentication result information to inviter's device 110 and provide a visit reservation service to inviter's device 110 that has been normally authenticated.

Referring to **FIG. 3** again, process 300 may continue to step 330 where building access control server 130 checks the inviter information when receiving the visitor registration request and generates a temporary password for the visitor. Building access control server 130 may register the visitor information corresponding to the inviter who requests registration of the visitor and generate a temporary password corresponding thereto. The registration of the visitor may be performed by matching the inviter information with the visitor information and storing the matching result in database 240.

After performing step 330 of checking invitation information and generating a temporary password, building access control server 130 may perform step 340 of registering the visitor information and the temporary password in local access system 140, step 350 of transmitting, to inviter's device 110, a notification message indicating that the registration of the visitor has been completed and step 360 of transmitting, to visitor's device 120, a notification message indicating the registration of the visitor and the temporary password. Herein, steps 340, 350 and 360 are not necessarily performed in sequence, and the sequence thereof is not limited to that described above.

Local access system 140 that has received the visitor information and the temporary password corresponding to the registered visitor's vehicle through step 340 may allow the visitor's vehicle to enter the parking lot through entrance gate control device 141 and/or parking lot control device 142.

In an embodiment, entrance gate control device 141 may recognize the temporary password received from building access control server 130 and allow the visitor to pass when the visitor uses the temporary password. For example, entrance gate control device 141 may be equipped with an opening/closing device for opening and closing an entrance gate and a temporary password input device. The temporary password input device may include at least one sensor unit for identifying the visitor. The sensor unit may include an imaging device or infrared recognition device that recognizes an identification tag (e.g., barcode, QR code or facial recognition) indicating authorization to pass. As another example, the temporary password input device may include an input unit (e.g., keypad) through which the user can input a password. The visitor may use the temporary password received by visitor's device 120 by making the temporary password recognized by the sensor unit. Alternatively, the visitor may use the temporary password received by visitor's device 120 by directly inputting the temporary password into the input device such as a keypad.

In an embodiment, when the visitor's vehicle arrives at the entrance to the inviter's parking lot, parking lot control device 142 installed at the entrance to the parking lot may include a vehicle plate number recognition device, and an image of the incoming visitor's vehicle may be acquired through the vehicle plate number recognition device. Also, when the vehicle plate number is recognized from the acquired image and the recognized vehicle plate number of the visitor's vehicle is determined as a pre-registered visitor's vehicle, the barrier gate of parking lot control device 142 is opened. In this way, a visit reservation service for a registered visitor's vehicle to allow the incoming visitor's vehicle to enter the parking lot is provided. in this case, the temporary password includes the vehicle plate number included in the visitor information, and when the vehicle plate number is recognized by the vehicle plate number recognition device installed in the parking lot, it may be regarded that the temporary password is used.

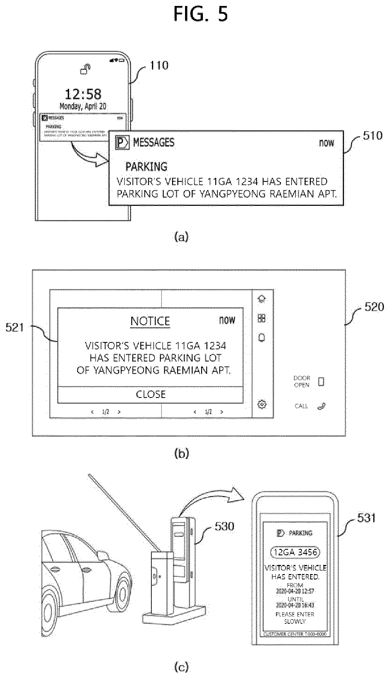

In an embodiment, when the visitor's vehicle enters the parking lot, the entry of the visitor's vehicle may be displayed as a notification message on entrance gate control device 141, parking lot control device 142, inviter's device 110, and visitor's device 120. For example, referring to **FIG. 5A****,** the entry of the visitor's vehicle into the reserved parking lot may be displayed as a notification message 510 on inviter's device 110 or visitor's device 120. To this end, building access control server 130 may transmit a message indicating the entry of the visitor's vehicle to inviter's device 110 or visitor's device 120 so that the notification message can be displayed on inviter's device 110 or visitor's device 120.

As another example, referring to **FIG. 5B**, a notification message 521 indicating the entry of the visitor's vehicle may also be displayed on a wall pad 520 installed as another example of inviter's device 110 in a residence of the inviter. Building access control server 130 or local access system 140 may transmit a message indicating the entry of the visitor's vehicle to wall pad 520 so that notification message 521 can be displayed on wall pad 520.

As yet another example, referring to **FIG. 5C**, parking lot control device 142 may further include a display device 530. Display device 530 may display a notification message 531 indicating the entry of the visitor's vehicle so that the visitor in the visitor's vehicle can see notification message 531. Display device 530 may be operatively connected to local access system 140 and/or parking lot control device 142.

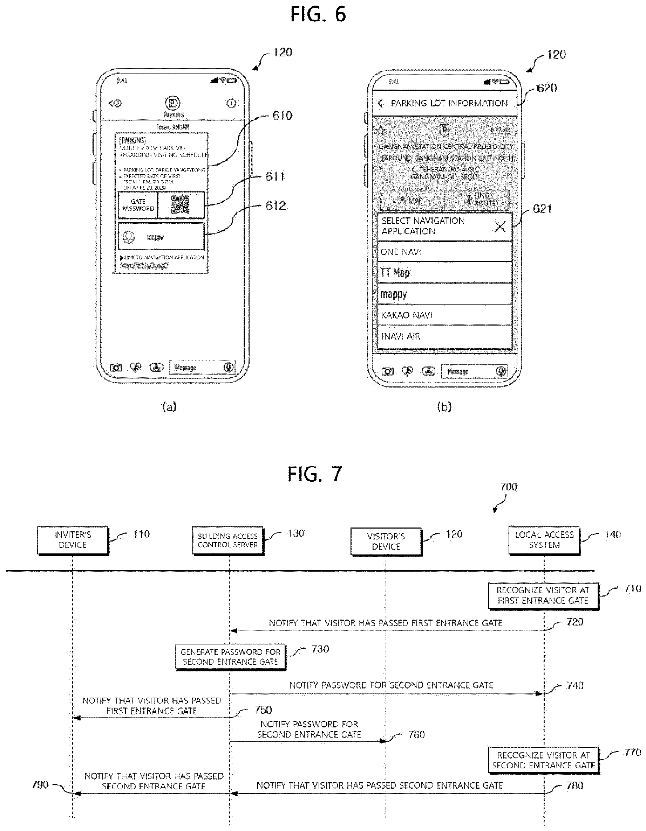

Referring to **FIG. 3** again, in step 360 of transmitting, from building access control server 130 to visitor's device 120, the notification message indicating the completion of registration of the visitor and the temporary password required for the visitor to pass the entrance gate, the notification message may further include data for providing a route guidance from the visitor's current position to the inviter's residence where parking has been reserved. As specific examples of a notification message, **FIG. 6** illustrates notification messages displayed on a visitor's device in accordance with an embodiment of the present disclosure. Referring to **FIG. 6A**, visitor's device 120 may display a notification message 610 transmitted from building access control server 130. Notification message 610 may be displayed in the form of a text message or a notification message displayed in an application. Notification message 610 may further include a temporary password 611 for the visitor to pass the entrance gate or a gate of the parking lot and a web link 612 that shows specific parking lot information in addition to information indicating that a parking reservation has been made for the visitor's vehicle. Temporary password 611 may include a two-dimensional code comprising a QR code as shown in the drawing. Alternatively, temporary password 611 may be composed of a combination comprising at least one of numbers, letters and symbols.

When the visitor selects web link 612 displayed on visitor's device 120, visitor's device 120 may access a linked page to check specific parking lot information, and such a page 620 can be seen from **FIG. 6B**. Page 620 displayed on visitor's device 120 may display a selection window 621 as an object to select a linked navigation application for route guidance. When the user selects a navigation application installed in visitor's device 120 from selection window 621 for linked navigation application, visitor's device 120 may execute the selected navigation application to guide the visitor to the residence where parking has been reserved. In this embodiment, page 620 provided to be displayed on visitor's device 120 may be generated by building access control server 130. Page 620 may be a web page that can be accessed through a web browser or a page displayed in an application. Before performing step 350 of transmitting, to visitor's device 120, the notification message indicating that the registration of the visitor has been completed, building access control server 130 may generate page 620. That is, page 620 may display an object such as an icon that enables the navigation application to be executed in visitor's device 120. When the visitor selects the object, the navigation application may be executed, and information about the visiting place may be provided to the navigation application so that a route guidance to the visiting place (or the address of the visiting place) can be immediately performed.

As described above, the visit reservation service according to an embodiment of the present disclosure makes it possible to make a visit reservation and also makes it easier for the visitor using a vehicle to access an invitation place. When the visitor makes a visit reservation, the visitor visits the invitation place for the first time in many cases. Therefore, the visitor may not correctly remember the name or address of the invitation place. However, according to the present disclosure, when a message indicating that registration of visit reservation has been completed is transmitted to visitor's device 120, the visitor can start to execute a navigation application for route guidance from the message. That is, the visit reservation service according to the present disclosure may provide the visitor with a unique user experience that enables the visitor to easily go find the visiting place.

**FIG. 7** is a flowchart explaining operations performed to provide a visit reservation service in accordance with another embodiment of the present disclosure. A process 700 shown in **FIG. 7** may include one or more operations, functions and effects as exemplified by steps 710, 720, 730, 740, 750, 760, 770, 780 and 790. Meanwhile, the outlined operations shown in **FIG. 7** are only provided as examples and some of the operations may be optional, combined into fewer operations, or expanded into additional operations without detracting from the essence of the disclosed embodiments. However, the blocks of process 700 shown in **FIG. 7** which are substantially the same as those of process 300 shown in **FIG. 3** will not be described in detail.

Referring to FIG. 7, process 700 may begin at step 710 where the visitor is recognized at a first entrance gate included in local access system 140. When the visitor wants to visit the inviters residence, the visitor may execute a visit reservation application or web browser application in visitor's device 120 and input inviter information and visitor information. In step 720, the first entrance gate may be entrance gate control device 141 or parking lot control device 142 included in local access system 140. The first entrance gate may identify whether the visitor is authorized to pass the first entrance gate using a first password and may recognize that the visitor passes the first entrance gate. In this case, for example, the visitor may put a two-dimensional code assigned as a first password to the sensor unit or the vehicle plate number regarded as the visitor's vehicle plate number may be recognized by the sensor unit in the parking lot.

Process 700 may continue to step 720 where local access system 140 notifies building access control server 130 that the visitor has passed the first entrance gate.

Process 700 may continue to step 730 where building access control server 130 generates a temporary password for a second entrance gate in response to the notification that the visitor has passed the first entrance gate. That is, the building access control system of the present disclosure generates the temporary password for the second entrance gate when the visitor passes the first entrance gate according to the sequence of visiting areas set by the inviter, and, thus, the security of the building can be enhanced. This is because as for a building having a plurality of entrance gates, if a temporary password for each entrance gate is previously set in response to a visit reservation, the temporary passwords are highly likely to be leaked.

Referring to **FIG. 4**, the inviter may set visiting areas for the visitor to restrict the visitor from entering the restricted visiting areas and set the sequence of visiting areas to enhance the security through portion 430 to set restricted visiting areas and the sequence thereof in inviter's device 110. Although **FIG. 4** illustrates an embodiment where allowable visiting areas are displayed with checkboxes and the sequence can be set by dragging, other various embodiments are also possible.

Referring to **FIG. 7** again, in process 700, step 740 of notifying local access system 140 of the password for the second entrance gate, step 750 of notifying inviter's device 110 that the visitor has passed the first entrance gate and step 760 of notifying visitor's device 120 of the password for the second entrance gate may be performed in response to the generation of the password for the second entrance gate. Herein, steps 740, 750 and 760 are not necessarily performed in sequence, and the sequence thereof is not limited to that described above. Subsequent steps 770, 780 and 790 may be performed in substantially the same manner as steps 710, 720 and 750.

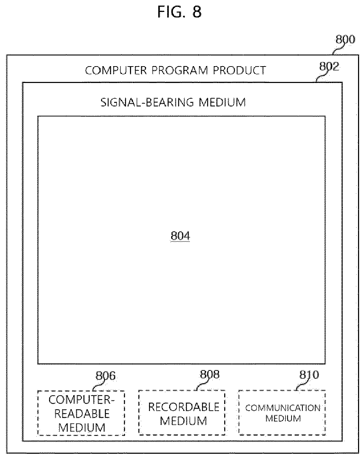

**FIG. 8** illustrates an exemplary computer program product 800 that is executed in a building access control system in accordance with an embodiment of the present disclosure. An exemplary embodiment of exemplary computer program product 800 is provided using a signal bearing medium 802. In an embodiment, one or more signal bearing mediums 802 of computer program product 800 may include a computer-readable medium 806, a recordable medium 808 and/or a communication medium 810.

An instruction 804 included in signal bearing medium 802 may be implemented by a computing device such as inviter's device 110, visitor's device 120, building access control server 130 and local access system 140. Instruction 804 may include at least one of an instruction to cause the computing device to receive a visitor registration request comprising visitor information and visiting place information, an instruction to generate at least one temporary password based on the visiting place, an instruction to transmit an invitation message indicating the at least one temporary password to a visitor's device, and an instruction to transmit the visiting place information and the temporary password to a local access system identified based on the visiting place information.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The claimed subject matter is not limited in scope to the particular implementations described herein. For example, some implementations may be in hardware, such as employed to operate on a device or combination of devices, for example, whereas other implementations may be in software and/or firmware. Likewise, although claimed subject matter is not limited in scope in this respect, some implementations may include one or more articles, such as a signal bearing medium, a storage medium and/or storage media. This storage media, such as CD-ROMs, computer disks, flash memory, or the like, for example, may have instructions stored thereon, that, when executed by a computing device, such as a computing system, computing platform, or other system, for example, may result in execution of a processor in accordance with the claimed subject matter, such as one of the implementations previously described, for example. As one possibility, a computing device may include one or more processing units or processors, one or more input/output devices, such as a display, a keyboard and/or a mouse, and one or more memories, such as static random access memory, dynamic random access memory, flash memory, and/or a hard drive.

There is little distinction left between hardware and software implementations of aspects of systems; the use of hardware or software is generally a design choice representing cost vs. efficiency tradeoffs. There are various vehicles by which processes and/or systems and/or other technologies described herein can be effected (*e*.*g*., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (*e*.*g*., as one or more programs running on one or more computer systems), as one or more programs running on one or more processors (*e*.*g*., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution.

While certain example techniques have been described and shown herein using various methods and systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter also may include all implementations falling within the scope of the appended claims, and equivalents thereof.

Throughout this document, the term 'connected to' may be used to designate a connection or coupling of one element to another element and includes both an element being 'directly connected to' another element and an element being 'electronically connected to' another element via another element. Through the whole document, the term 'on' that is used to designate a position of one element with respect to another element includes both a case that the one element is adjacent to the other element and a case that any other element exists between these two elements. Further, through the whole document, the term comprises or includes' and/or comprising or including' used in the document means that one or more other components, steps, operation and/or existence or addition of elements are not excluded in addition to the described components, steps, operation and/or elements unless context dictates otherwise. Through the whole document, the term 'about or approximately' or 'substantially' is intended to have meanings close to numerical values or ranges specified with an allowable error and intended to prevent accurate or absolute numerical values disclosed for understanding of the present disclosure from being illegally or unfairly used by any unconscionable third party.

The scope of the present disclosure is defined by the following claims rather than by the detailed description of the embodiment. It shall be understood that all modifications and embodiments conceived from the meaning and scope of the claims and their equivalents are included in the scope of the present disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. An operating method of a building access control system that is performed by a server to make a visit reservation, comprising:
receiving, from an inviter's device, a visitor registration request comprising visitor information and visiting place information;
generating at least one temporary password based on the visiting place information;
transmitting, to a visitor's device, an invitation message indicating the at least one temporary password; and
transmitting the visiting place information and the at least one temporary password to a local access system indentified based on the visiting place information,
wherein the at least one temporary password is generated corresponding to each of at least one of one or more entrance gates and parking lots included in the local access system.

2. The operating method of claim 1,
wherein the at least one temporary password is available only for a predetermined time included in the visiting place information.

3. The operating method of claim 1 or 2,
wherein the at least one temporary password includes a first temporary password and a second temporary password generated corresponding to two or more of the one or more entrance gates and parking lots included in the local access system.

4. The operating method of claim 3,
wherein the first temporary password and the second temporary password follow the sequence of availability, and the second temporary password is available after the first temporary password is used.

5. The operating method of claim 4,
wherein the second temporary password is generated after the first temporary password is used.

6. The operating method of any preceding claim,
wherein when the at least one temporary password is generated corresponding to the parking lot, the at least one temporary password includes a vehicle plate number included in the visitor information, and
when the vehicle plate number is recognized by a license number recognition device installed in the parking lot, the at least one temporary password is used.

7. The operating method of any preceding claim, further comprising:
generating a visitor page based on the visitor information,
wherein the invitation message includes a link to the visitor page, and
the visitor page is configured to display an object to execute a navigation application installed in the visitor's device and provide the visiting place information to the navigation application in order to guide the visitor to the visiting place through the navigation application in response to an input to the object.

8. The operating method of any preceding claim,
wherein the inviter's device includes a wall pad installed in a residence of the inviter.

9. A server for a building access control system, comprising:
one or more processors;
one or more memories that store one or more instructions to be executed by the one or more processors; and
a network module configured to communicate with a computing device included in an inviter's device, a visitor's device and a local control system,
wherein when the one or more instructions are executed by the one or more processors, the one or more instructions cause the server to perform:
receiving a visitor registration request comprising visitor information and visiting place information from the inviter's device;
generating at least one temporary password based on the visiting place;
transmitting an invitation message indicating the at least one temporary password to a visitor's device; and
transmitting the visiting place information and the at least one temporary password to a local access system indentified based on the visiting place information,
wherein the at least one temporary password is generated corresponding to each of at least one of one or more entrance gates and parking lots included in the local access system.

10. The server of claim 9,
wherein the at least one temporary password is available only for a predetermined time included in the visiting place information.

11. The server of claim 9 or 10,
wherein the at least one temporary password includes a first temporary password and a second temporary password generated corresponding to two or more of the one or more entrance gates and parking lots included in the local access system.

12. The server of claim 11,
wherein the first temporary password and the second temporary password follow the sequence of availability, and the second temporary password is available after the first temporary password is used,
wherein the second temporary password is generated after the first temporary password is used.

13. The server of any of claims 9 to 12,
wherein when the at least one temporary password is generated corresponding to the parking lot, the at least one temporary password includes a vehicle plate number included in the visitor information, and
when the vehicle plate number is recognized by a license number recognition device installed in the parking lot, the at least one temporary password is used.

14. The server of any of claims 9 to 13,
wherein when the one or more instructions are executed by the one or more processors, the one or more instructions cause the server to further perform generating a visitor page based on the visitor information,
wherein the invitation message comprises a link to the visitor page, and
wherein the visitor page is configured to display an object to execute a navigation application installed in the visitor's device and provide the visiting place information to the navigation application in order to guide the visitor to the visiting place through the navigation application in response to an input to the object.

15. A computer-readable storage medium that stores a building access control program,
wherein when the building access control program is executed by a computing device, the program includes one or more instructions that cause the server to perform:
receiving a visitor registration request comprising visitor information and visiting place information from an inviter's device;
generating at least one temporary password based on the visiting place;
transmitting an invitation message indicating the at least one temporary password to a visitor's device; and
transmitting the visiting place information and the temporary password to a local access system indentifed based on the visiting place information,
wherein the at least one temporary password is generated corresponding to each of at least one of one or more entrance gates and parking lots included in the local access system.
